# EUROPEAN PATENT APPLICATION

(11) **EP 4 636 451 A1**
(43) Date of publication of application: **22.10.2025**
(21) Application number: 25170010.0
(22) Date of filing: 11.04.2025
(51) Int. Cl.: G02B 6/44

(54) **FIBER TRAY ASSEMBLIES AND MOUNTING BRACKETS FOR RACK-MOUNT FIBER ENCLOSURES**

(30) Priority: 17.04.2024 US 202463634961 P
(71) Applicant: Corning Research And Development Corporation, Corning, New York 14831 (US)
(72) Inventor: CIESLAK, Adam Jerzy, 97-300 ódzkie (PL)
(74) Representative: Reddie & Grose LLP

(57) **Abstract**

In one embodiment, a mounting bracket for mounting a fiber tray assembly to a rack includes a rack engagement portion operable to be positioned against the rack. The rack engagement portion includes a plurality of lock opening and fastener hole pairs, where a location of each lock opening and each fastener hole is operable to be aligned with an aperture of the rack. The mounting bracket further includes a base extending from an end of the rack engagement portion, at least one mounting arm extending from the base such that a gap is present between the at least one mounting arm and the base, and a first support surface and a second support surface each connected to the rack engagement portion and the base.

## Description

### PRIORITY APPLICATION

This application claims the benefit of priority of U.S. Provisional Application No. 63/634,961, filed on April 17, 2024, the content of which is relied upon and incorporated herein by reference in its entirety.

### BACKGROUND

Datacenters utilize rack-mount fiber enclosures for storing and optically connecting optical fibers. A rack-mount enclosure may store hundreds of optical fibers and associated optical connectors. Thus, optical fiber management is an important aspect to consider. Optical fiber management is typically provided by trays (also referred to as cassettes) that slide into and out of the rack-mount fiber enclosure. However, movement of the trays into and out of the rack-mount fiber enclosure also moves the optical fibers within the tray, which may cause undesirable optical loss by loosening of optical connectors, or by bending the optical fibers to a bend radius below a maximum threshold. Movement of optical fibers within the tray is particularly problematic.

Accordingly, alternative structures for optical fiber movement management in rack-mount fiber enclosures may be desired.

### SUMMARY

Embodiments of the present disclosure are directed to components that provide optical fiber slack management in the form of a serpentine path that is external to a fiber tray. Any movement of optical fibers during the sliding of a tray occurs external to the tray, thereby minimizing movement of optical fibers within the tray and thus minimizing optical loss due to optical fiber movement.

In one embodiment, a mounting bracket for mounting a fiber tray assembly to a rack includes a rack engagement portion operable to be positioned against the rack. The rack engagement portion includes a plurality of lock opening and fastener hole pairs, where a location of each lock opening and each fastener hole is operable to be aligned with an aperture of the rack. The mounting bracket further includes a base extending from an end of the rack engagement portion, at least one mounting arm extending from the base such that a gap is present between the at least one mounting arm and the base, and a first support surface and a second support surface each connected to the rack engagement portion and the base.

**In** another embodiment, a fiber tray assembly includes a tray, a first tray member and a second tray member. The tray is slidably attached to the first tray member and the second tray member. The fiber tray assembly further includes at least one fiber routing sub-assembly coupled to the tray and including a channel assembly having a top plate and a bottom plate that define a channel. The fiber tray assembly also includes a router coupled to an end of the channel assembly, the router including one or more slots for routing one or more optical fibers, and at least one bridge includes a bend radius protector and an engagement member. The engagement member is operable to pivotally attach to the tray, where the channel assembly, the router, and the at least one bridge define a serpentine fiber routing path that is external to the tray. The fiber tray assembly also includes at least one mounting bracket for mounting the tray, the first tray member, the second tray member, and the at least one fiber routing sub-assembly to a rack.

In another embodiment, a fiber rack assembly includes a rack having a plurality of apertures, a first mounting bracket and a second mounting bracket each coupled to the rack by way of individual apertures of the plurality of apertures. The fiber rack assembly also includes a fiber tray assembly coupled to the first mounting bracket and the second mounting bracket. The fiber tray assembly includes a tray, a first tray member and a second tray member. The tray is slidably attached to the first tray member and the second tray member. The tray assembly further includes a first fiber routing sub-assembly and a second fiber routing sub-assembly coupled to the tray. The first fiber routing sub-assembly the second fiber routing sub-assembly each includes a channel assembly having a top plate and a bottom plate that define a channel, and a router coupled to an end of the channel assembly, the router including one or more slots for routing one or more optical fibers. At least one of the first fiber routing sub-assembly and the second fiber routing sub-assembly includes at least one bridge having a bend radius protector and an engagement member, where the engagement member is operable to pivotally attach to the tray, where the channel assembly, the router, and the at least one bridge define a serpentine fiber routing path that is external to the tray.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a perspective view of an example tray assembly according to one or more embodiments described and illustrated herein.
FIG. 2 illustrates a perspective view of the example tray assembly of FIG. 1 with a cover in an open position according to one or more embodiments described and illustrated herein.
FIG. 3 illustrates a perspective view of the example tray assembly of FIG. 1 with a cover and a boot support in an open position according to one or more embodiments described and illustrated herein.
FIG. 4 illustrates an exploded view of the tray assembly according to one or more embodiments described and illustrated herein.
FIG. 5 illustrates a side perspective view of the example tray assembly of FIG. 1 with the cover and the boot support in a closed position according to one or more embodiments described and illustrated herein.
FIG. 6 illustrates an example bridge according to one or more embodiments described and illustrated herein.
FIG. 7 illustrates a side perspective view of the example tray assembly of FIG. 1 with the cover and the boot support in a closed position and a serpentine path for optical fibers according to one or more embodiments described and illustrated herein.
FIG. 8 illustrates serpentine paths for optical fibers in both open and closed tray positions.
FIG. 9A illustrates a perspective view of an example mounting bracket according to one or more embodiments described and illustrated herein.
FIG. 9B illustrates a side view of an example mounting bracket according to one or more embodiments described and illustrated herein.
FIG. 10A illustrates a close-up, front perspective view of a rack engagement portion of an example mounting bracket according to one or more embodiments described and illustrated herein.
FIG. 10B illustrates a close-up, rear perspective view of a rack engagement portion of an example mounting bracket according to one or more embodiments described and illustrated herein.
FIG. 10C illustrates a close-up view of a lock and a lock inserted into a lock opening of a rack engagement portion of an example mounting bracket according to one or more embodiments described and illustrated herein.
FIG. 11 illustrates a rear perspective view of an example mounting bracket according to one or more embodiments described and illustrated herein.
FIG. 12 illustrates a side perspective view of an example channel assembly for coupling to a mounting bracket according to one or more embodiments described and illustrated herein.
FIG. 13 illustrates an example mounting bracket attached to a rack by a lock according to one or more embodiments described and illustrated herein.
FIG. 14A illustrates a perspective view of an example fiber rack assembly including a fiber tray assembly coupled to a rack by two mounting brackets according to one or more embodiments described and illustrated herein.
FIG. 14B illustrates a perspective view of an example fiber rack assembly including a fiber tray assembly removed from a rack according to one or more embodiments described and illustrated herein.

### DETAILED DESCRIPTION

Embodiments of the present disclosure are directed to fiber tray assemblies that provide optical fiber slack management external to a fiber tray. More particularly, the fiber tray assemblies described herein have a fiber routing sub-assembly external to the tray that provides a slack optical fiber storage area in the form of a serpentine path that is external to the tray. Having this serpentine path external to the tray minimizes optical fiber movement within the tray, particularly when the tray is opened and closed. This further minimizes optical loss due to fiber movement. The fiber tray assemblies described herein are backwards compatible with existing housings and racks and therefore do not require re-design of these components.

The fiber tray assemblies described herein are operable to be disposed within industry standard rack sizes, which means a customer can continue reusing existing rack hardware, thereby saving significant upgrade costs. For example, the tray assemblies described herein may be inserted into Centrix^{™} racks sold by Corning Optical Communications of Charlotte, NC, as well as industry standard 19 and 21 racks. The tray assemblies of the present disclosure provide a high-density solution that is highly scalable, offers wide functionality range and advantageous cost levels, and is compatible with most rack footprints. Embodiments of the present disclosure include mounting brackets that enable the fiber tray assemblies described herein to be mounted to racks of different sizes and configurations.

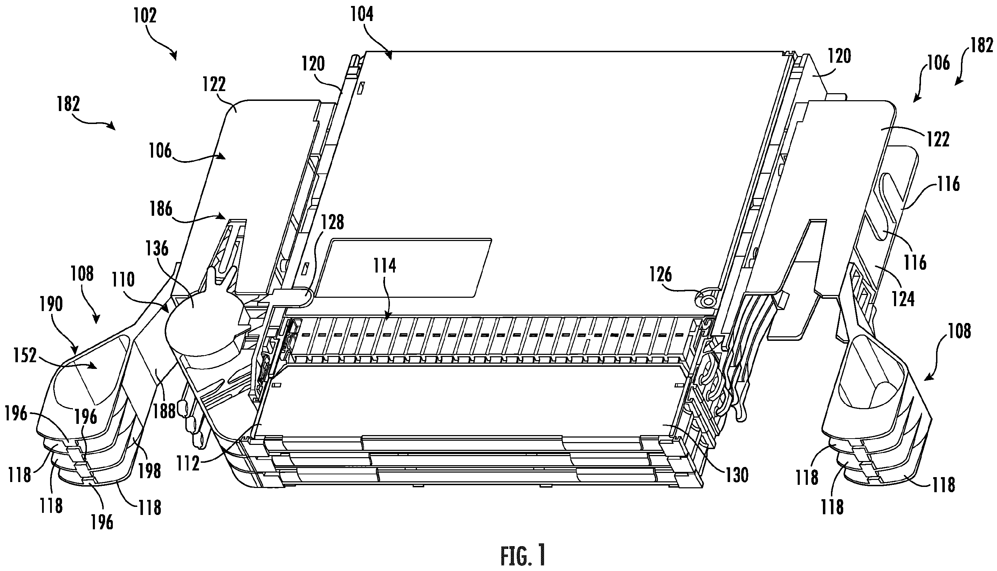

Referring now to FIG. 1, an example tray assembly 102 is illustrated in a perspective view. The tray assembly 102 includes tray members 120 that are operable to be secured to a frame or other member of a rack (not shown). The tray members 120, which may be components of a housing to be positioned within a rack, are operable to slidably receive one or more trays 104 (also known as cassettes) maintaining a plurality of adapters 114. FIG. 1 illustrates an embodiment in which there are three trays 104 coupled to the tray members 120. However, it should be understood that more or fewer trays 104 may be provided. Each tray 104 of the tray assembly 102 may be slid into and out of the rack along the tray members 120. As described in more detail below, the trays 104 provide an enclosure to route optical fibers and provide adapter 114 to mate optical connectors (not shown) within the rack, for example.

The trays 104 may be configured as any known or yet-to-be-developed trays for connecting patch cords in an enclosure, such as a rack. As a non-limiting embodiment, the trays 104 may be operable to be inserted into Centrix^{™} racks (also referred to herein as housing). It should be understood that other trays/cassettes may be utilized with the embodiments described herein.

Each tray of the tray assembly 102 includes a jumper area 112 for receiving the optical connectors of patch cords that are mated to the adapters 114, which act as receptacle connectors. The connectors of the patch cords are inserted into the adapters 114 and are contained within the jumper area 112. Thus, the jumper area 112 is sized to accommodate the length of the optical connectors.

As described in more detail below, the tray assembly 102 includes at least one fiber routing sub-assembly 182, which provides a serpentine fiber routing path that is external to the tray 104. The external serpentine fiber routing path minimizes patch cord movement when the tray is slid into and out of the rack.

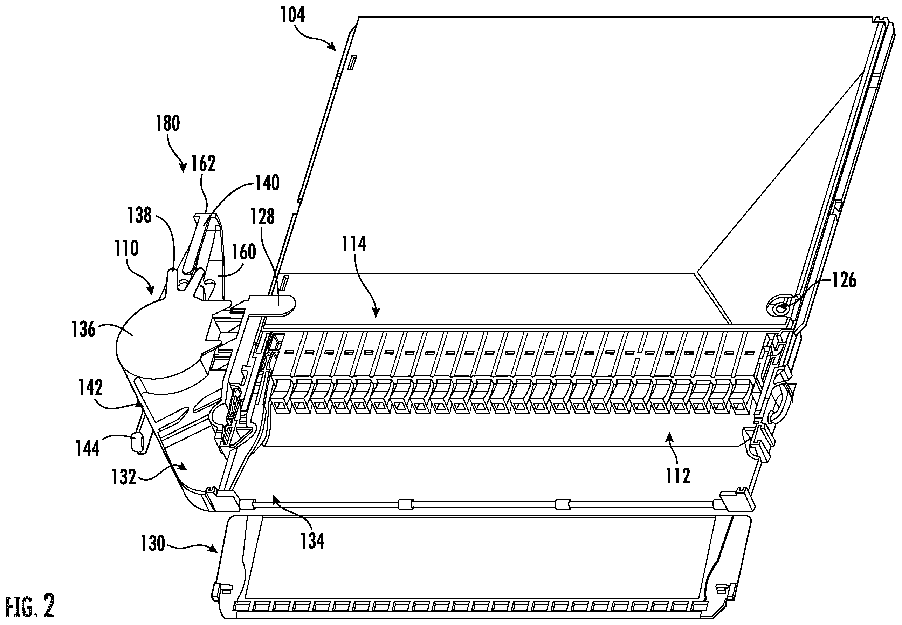

Each tray 104 includes a cover 130 that is operable to cover the jumper area 112 when in the closed positioned. FIG. 2 illustrates the cover 130 in an open position to provide access to the adapters 114 within jumper area 112. The cover 130 may be hingedly connected to the main body of the frame such that it may rotate downward in a direction away from the jumper area 112 to open the tray and expose the jumper area 112. The cover 130 may also be configured to rotate upward in a direction toward the jumper area 112 into the closed position to cover the jumper area 112 and protect the optical connectors therein. An operator may open the cover 130 to expose the adapter 114 when plugging a connector of a patch cord (not shown) into an individual adapter 114, or when removing a connector of a patch cord from an individual adapter 114, for example. The cover 130 protects both the connectors of the patch cord and the adapters 114 from movement and any dust and debris when it is in the closed position.

In some embodiments, the tray 104 further includes a boot support 134 that supports the boots of optical connectors within the jumper area 112. A connector boot is a rear portion of a connector that is often flexible and provides strain relief functionality. The boot support 134 provides a location within the tray 104 for the boots of the patch cord connectors to be positioned.

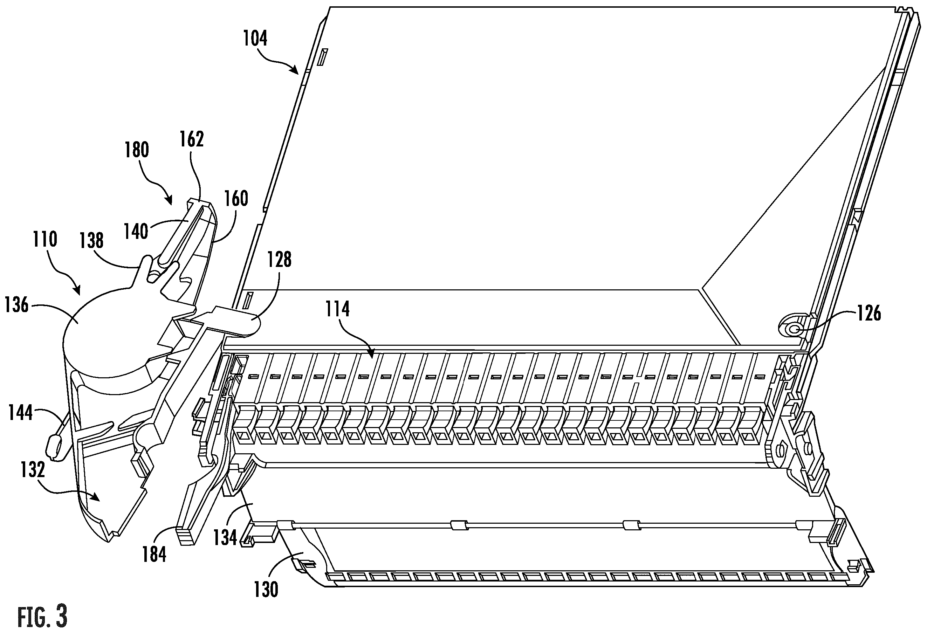

Referring now to FIG. 3, the boot support 134 may also be configured to be opened by pivoting downward in a direction away from the jumper area 112 by ninety degrees. A latch 184 is provided to unlock the boot support 134 and allow it to pivot downward. To open the boot support 134, a user first opens the cover 130. A user may then press the latch 184 in a direction toward the adapters 114 to unlock the boot support 134. The ability to pivot the boot support 134 is advantageous because it allows an operator greater access to the connectors of the patch cords within the tray. When the boot support 134 is in an open position, the operator has the ability to grasp an individual connector of a patch cord from both the top and the bottom, which then allows the operator to easily push the connector into an adapter 114, or pull the connector out of the adapter 114 as the case may be. The operator can then pivot the boot support 134 back up in a direction toward the adapters 114 and lock it back into place such that it supports the connectors of the patch cords.

Referring collectively to FIGS. 1-5, the example tray assembly 102 further includes one or two fiber routing sub-assemblies 182 on the side(s) of the tray(s) 104.

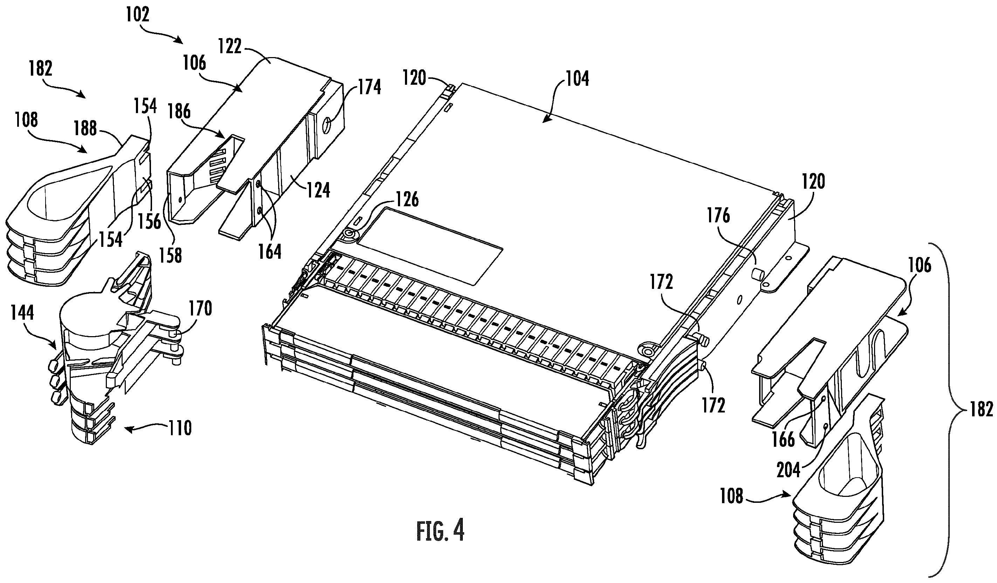

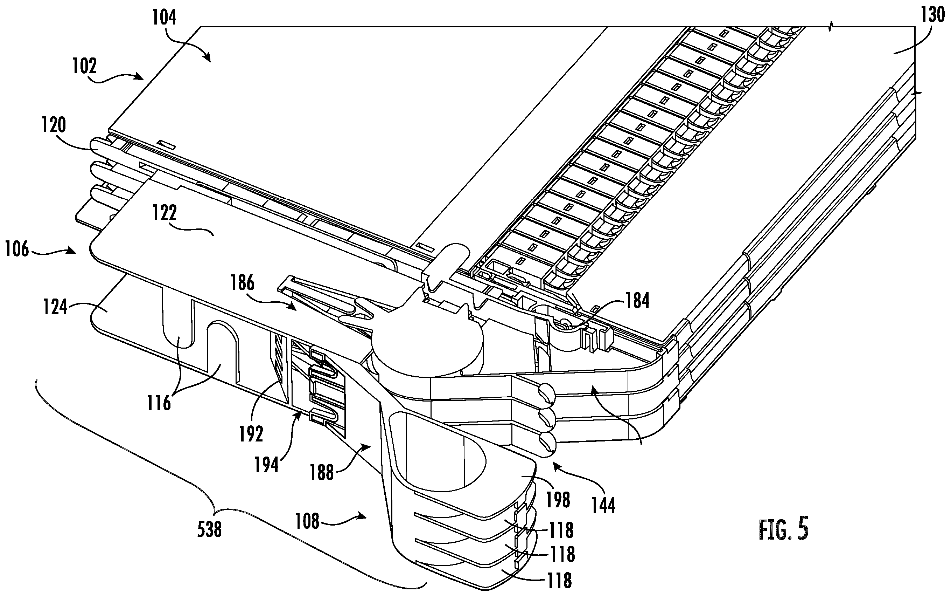

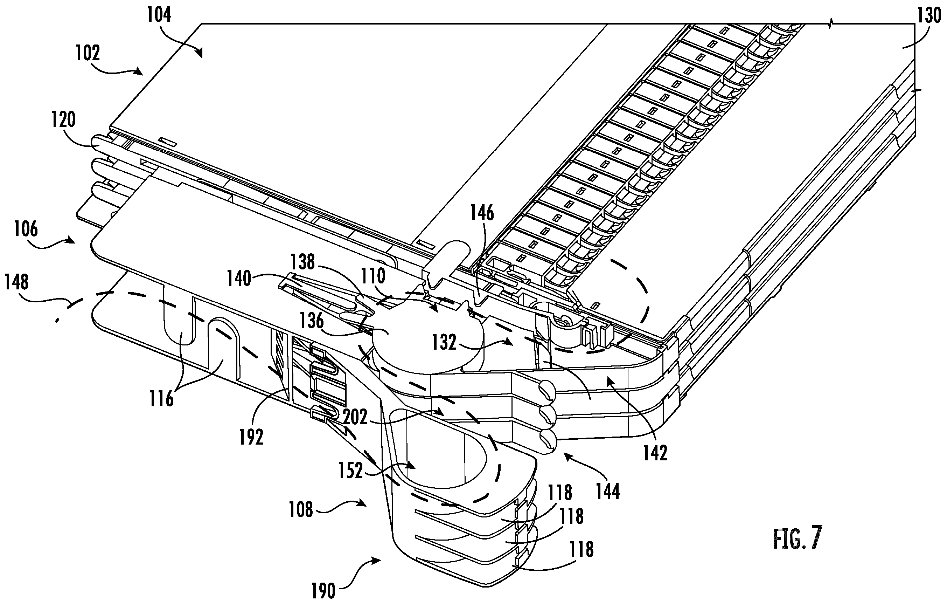

FIG. 4 is a partially exploded perspective view of the tray assembly 102 while FIG. 5 is a close-up perspective view of a fiber routing sub-assembly 182. The fiber routing sub-assembly 182 includes components that cooperate to provide a serpentine path 148 (FIG. 7) for excess optical fiber (e.g., patch cords) to prevent or minimize optical fiber movement within the tray 104 when the tray 104 is slid out along the frame tray members 120. Providing a serpentine path 148 for optical fiber external from the tray 104 rather than inside of the tray 104 minimizes or eliminates the movement of optical fiber within the interior of the tray 104. Fiber movement within the tray 104 and close to the optical connection between the connectors of the patch cords and the adapters 114 is undesirable because it may affect the optical connectors, and further bending of optical fibers beyond a minimum bend radius can introduce optical loss.

More particularly, the fiber routing sub-assembly 182 includes a channel assembly 106, a router 108 and a bridge 110. It is noted that the fiber routing sub-assembly 182 on the right-hand side of the illustrated trays 104 is shown not having a bridge 110. It should be understood that the fiber routing sub-assembly 182 would include a bridge 110 on both sides of the trays 104 if two fiber routing sub-assemblies 182 are desired to route optical fiber into the tray from both sides of the trays 104.

The channel assembly 106 provides a partially enclosed space for optical fibers to enter the tray assembly 102. In the illustrated embodiment the channel assembly 106 has a cuboid shape but embodiments are not limited thereto. The illustrated channel assembly 106 includes a bottom plate 124 for supporting the optical fibers disposed therein, as well as a top plate 122 to protect and partially enclose the optical fibers.

As best shown in FIG. 5, each of the top plate 122 and the bottom plate 124 include a claw 116 that extends toward the other of the top plate 122 and the bottom plate 124. The claws 116, which are configured as tabs, prevent the optical fibers from jumping out of the channel assembly 106, and thus keep them maintained within the channel assembly 106. The claws 116 also provide an operator with access to the optical fibers between the top plate 122 and the bottom plate 124. Any number of claws 116 may be provided. In other embodiments, a side wall may be provided instead of, or in addition to, the claws 116.

The channel assembly 106 is attached to a side of a tray member 120 that is opposite from the tray 104. As best shown in FIG. 4, the channel assembly includes several engagement features, such as two tray member engagement feature 1-102 configured as openings for receiving a screw. The tray member 120 also includes two channel assembly engagement feature 172 that align with the two tray member engagement feature 164 to receive screws to attach the channel assembly 106 to the tray member 120. In the illustrated example, the channel assembly 106 further includes a tray member engagement aperture 174 that receives a channel assembly engagement post 176. Insertion of the channel assembly engagement post 176 into the tray member engagement aperture 174 aligns the channel assembly 106 with respect to the tray member 120. It should be understood that that other means for connecting the channel assembly 106 to the tray member 120 are also possible, such as by snap-fit features, for example.

Each of the top plate 122 and the bottom plate 124 include a bridge opening 186 for receiving a portion of a bridge 110, as best shown in FIGS. 1, 4 and 5. The bridge opening 186 may be tapered by having a larger opening at the front face and a narrow opening at the opposite end to guide to guide the bridge 110 into the bridge opening 186. The channel assembly 106 has a height corresponding to the number of bridges 110 that channel assembly 106 is configured to mate with. There are three bridges 110 mated with the channel assembly 106 in the illustrated embodiment. However, the channel assembly 106 may be configured to accept more or fewer bridges 110. The height of the channel assembly 106 increases as the number of bridges 110 that channel assembly 106 is configured to accept increases.

As best shown in FIG. 5, the channel assembly 106 includes an angled guide wall 192 that both supports the top plate 122 and the bottom plate 124, as well as assists in guiding the optical fibers out of the channel assembly 106. The guide wall 192 keeps the optical fibers within channel assembly 106 such that the optical fibers can exit at a desired location.

The router 108 is operable to route the optical fibers from the channel assembly 106 to the bridges 110. As best shown in FIG. 5, the router includes a router arm 188 having an end that is operable to be connected to the channel assembly 106. Any means for connecting the router arm 188 to the channel assembly 106 may be utilized, such as by a snap-fit or an interference fit. Referring to FIG. 4, the router arm 188 of the illustrated embodiment includes two slots 154 that define a tab 156. The router arm 188 may be coupled to the channel assembly 106 by positioning a wall 158 into the two slots 154 such that the tab 156 is within an interior of the channel assembly 106. This secures the router arm 188 to the channel assembly 106 by an interference fit. Screws or nuts and bolts may also be provided through router engagement feature 166 (FIG. 4) to further secure the router arm 188 to the channel assembly 106.

The router arm 188 terminates at a distal end that comprises a routing portion 190. The router arm 188 has an angle such that the routing portion 190 is offset from the bridges 110 and the trays 104. In other words, the router arm 188 has an angle that is transverse to a central axis defined by the channel assembly 106 such that it pivots away from the trays 104.

The routing portion 190, which has a lobe shape, has a plurality of slots 118 (FIG. 5) extending from a curved surface 198 at an end opposite from the router arm 188. The slots 118 are arranged in a stacked relationship. The number of slots 118 corresponds with the number of trays 104 in the tray assembly 102. Thus, each individual slot 118 corresponds with in individual tray 104. Optical fibers to be routed to the top-most tray will be disposed within the top-most slot 118, for example. As described in more detail below, the curved surface 198 is operable to contact optical fibers within the slots 118 and has a radius corresponding to a desired bend radius of the optical fiber to prevent the optical fiber from bending beyond a threshold bend radius. Therefore, the radius of the curved surface 198 prevents optical loss from bending the optical fiber. It is noted that a central region 152 may be open to reduce the overall weight of the router 108.

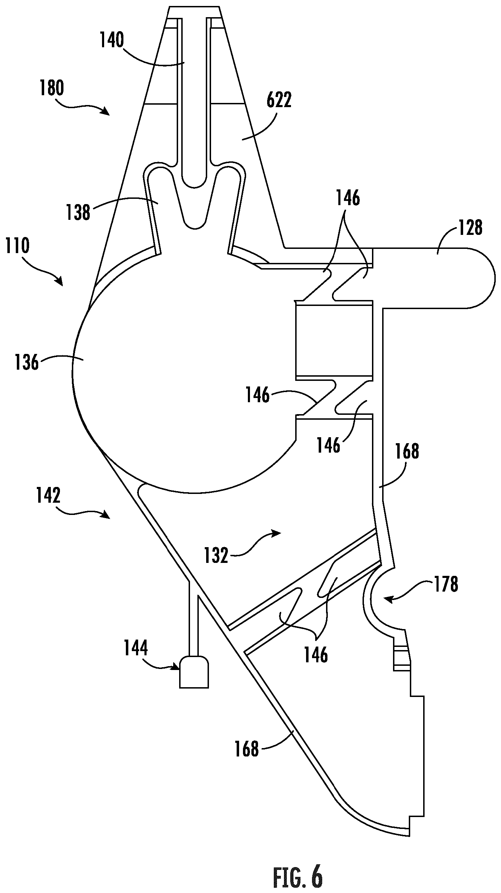

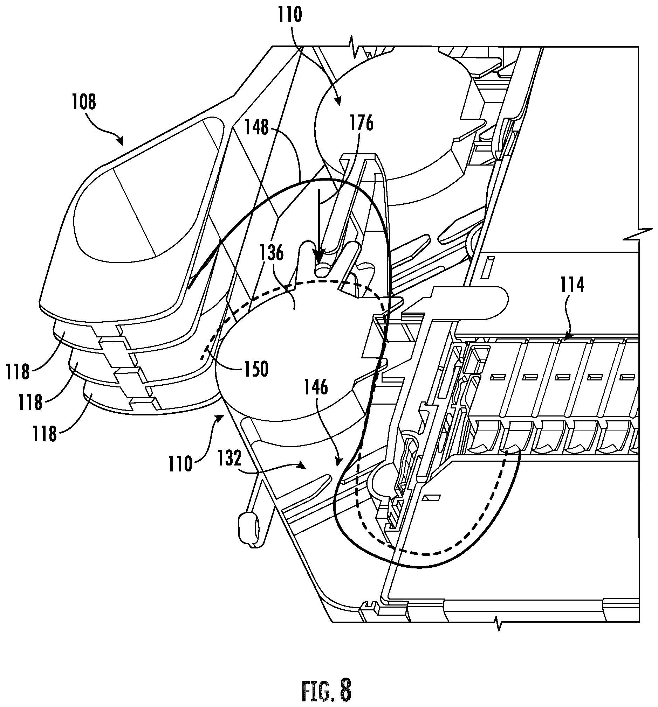

Referring now to FIG. 6 in conjunction with FIGS. 1-5, an example bridge 110 is illustrated. The bridge 110 includes a channel engagement arm 180, a bend radius protector 136, and a finger 142. The channel engagement arm 180 has a tapered profile to be at least partially disposed within the bridge opening 186 of the channel assembly 106. The channel engagement arm 180 includes a lower surface 160 for supporting optical fibers, a rear wall 162, and an upper tab 140. The upper tab 140 extends from the rear wall 162 such that there is a gap between the upper tab 140 and the lower surface 160. The optical fibers from the router 108 are routed and positioned within the gap, and the upper tab 140 prevents the optical fibers from popping out of the channel engagement arm 180. The length of the channel engagement arm 180 provides a slack fiber storage area for storing slack optical fiber, particularly when the tray 104 is slid in and out of the rack as illustrated in FIG. 8,

The bend radius protector 136 is located within the finger 142, and has a diameter that provides proper bend radii for optical fibers during operation of the tray assembly 102. Thus, the bend radius protector 136 prevents undesirable bend radii of the optical fibers to prevent optical loss. The bend radius protector 136 further has a V-shaped tab 138 extending from its top surface in a direction toward the upper tab 140. An end of the upper tab 140 is disposed between two prongs of the V-shaped tab 138. The V-shaped tab 138 and the upper tab 140 cooperate to prevent the optical fibers from popping out of the bridge 110.

The triangular shape of the finger 142 extending from the bend radius protector 136 defines a fiber routing area 132 for the optical fibers. Tabs 146 extending from the upper surface of the bend radius protector 136 and wall 168 of the finger 142 prevent the optical fibers from extending beyond of the fiber routing area 132. A gap is provided between adjacent tabs 146 to be able to manually insert or remove optical fibers from the fiber routing area 132 as needed.

Each bridge 110 has an engagement arm 128 extending outward from the finger 142. The engagement arm 128 is operable to be pivotally attached to an edge of a tray 104. Referring to FIG. 4, the engagement arm 128 includes an engagement pin 170 that extends from its lower surface. The tray 104 includes an attachment point 126 that is operable to receive the engagement pin 170 of the engagement arm 128. The attachment point 126 may be configured as a recess (i.e., a blind bore) within the upper surface of the tray 104. As a non-limiting example, the engagement pin 170 of the engagement arm 128 may snap or otherwise fit into the attachment point 126 to pivotally secure the bridge 110 to the tray 104. Each bridge 110 is attached to an individual tray 104 such that the bridges 110 are in a stacked relationship within in the fiber routing sub-assembly 182.

The bridge 110 further includes features to operate the bridge 110 and the tray 104. A latch 144 may be provided to allow a user to hold the bridge 110 to both push and pull the tray 104 and the bridge 110 along the tray members 120. The illustrated latch 144 extends from a wall 168 of the finger 142 and has a hook-shape. The operator will grasp the latch 144 and slide the tray 104 and bridge 110 along tray members 120 to perform various operations. The trays 104 and bridges 110 are individually accessible by grasping the appropriate latch 144. The latch 144 makes it easier for operator to access and manipulate individual trays 104.

As best shown in FIG. 6, an edge of the finger 142 includes a finger access notch 178 that provides clearance for a finger of an operator to pivot the bridge 110 away from the tray 104. Thus, to pivot the bridge 110, the operator first pulls the tray 104 out along the tray members 120 by using a latch 144, then inserts his or her finger onto the finger access notch 178 and pushes the bridge 110 in a direction that is away from the tray 104. When the tray 104 is pulled out, the channel engagement arm 180 is no longer disposed within the bridge opening 186, thereby allowing the bridge 110 to rotate. The bridge 110 may be configured to rotate about 10 degrees, as a non-limiting example. The bridge 110 is configured to pivot away from the tray 104 to provide clearance for a user to access the latch 184 that is used to actuate the boot support 134 to pivot the boot support 134 downward, as shown in FIG. 3. Thus, movement of the bridge 110 improves user access to the latch 184.

Referring now to FIG. 7, the components of the fiber routing sub-assembly 182 form a serpentine path 148 for optical fiber of patch cords that is external from the tray 104. The serpentine path 148 begins at a rear of the channel assembly 106, continues through the channel assembly 106 and exits at a side of the channel assembly 106 after being deflected by the guide wall 192. The serpentine path 148 continues along an outer surface of the router arm 188 toward the routing portion 190 of the router 108. The serpentine path 148 then continues within one of the slots 118 of the routing portion 190 depending on which tray 104 the optical fiber is intended for. The curved shape of the routing portion 190 defines a first bend of the serpentine path 148 for the optical fiber. The diameter of the routing portion 190 is such that the optical fiber does not bend too much as to create optical loss for optical signals propagating in the optical fiber.

Next, the serpentine path 148 then traverses a gap 202 between the router 108 and a bridge 110 where it then wraps around a curved back surface of the bend radius protector 136 of the bridge 110. The bend radius protector 136 defines a second bend of the serpentine path 148 and also has a diameter such that the optical fiber does not bend beyond its bending limit. The V-shaped tab 138 and the upper tab 140 of the bridge 110 cooperate to maintain the optical fiber within the bridge 110. The serpentine path 148 continues by traversing the fiber routing area 132 such that the optical fiber is maintained within the fiber routing area 132 by various tabs. The serpentine path 148 then bends again such that it enters the interior of the respective tray 104.

The serpentine path 148 of the embodiments of the present disclosure form a complete S-shape that is completely external to the tray 104. Having the serpentine path 148 external to the tray eliminates or substantially minimizes movement of optical fibers, such as patch cords, within the tray 104, which further minimizes optical loss. Movement of the optical fibers within the tray 104 is minimized even when a user pulls a tray 104 out along the tray members 120.

The fiber routing sub-assembly 182 enables slack optical fiber to be maintained external to the tray 104, which minimizes movement of optical fiber within the tray 104, particularly when a tray 104 is slid out of the rack. FIG. 8 illustrates the optical fiber position relative to the bend radius protector 136 when the tray 104 is slid both fully in and fully out along the tray member 120 within a housing or rack. Serpentine path 148 illustrates the position of the optical fiber within the fiber routing sub-assembly 182 relative to the bend radius protector 136 when the top tray 104 is in an open position (i.e., slid out). Arrow 179 illustrates the fiber movement direction between the open and closed tray positions. The optical fiber is separated from the bend radius protector 136 and the slack has freedom to move, which minimizes movement of optical fiber within the top tray 104.

Serpentine path 150 illustrates the position of the optical fiber within the fiber routing sub-assembly 182 relative to the bend radius protector 136 when the top tray 104 is in a closed positioned (i.e., slid in). The optical fiber is in close proximity to the bend radius protector 136 of the bridge 110 in this state. The design of the bridge 110 allows for sufficient space to consume a relative increase of optical fiber length during the opening the tray 104.

As stated above, the tray assemblies 102 described herein are operable to be secured within industry standard rack sizes, which means a customer can continue reusing existing rack hardware, thereby saving significant upgrade costs. For example, the tray assemblies described herein may be inserted into Centrix^{™} racks sold by Corning Optical Communications, as well as industry standard 19 and 21 racks.

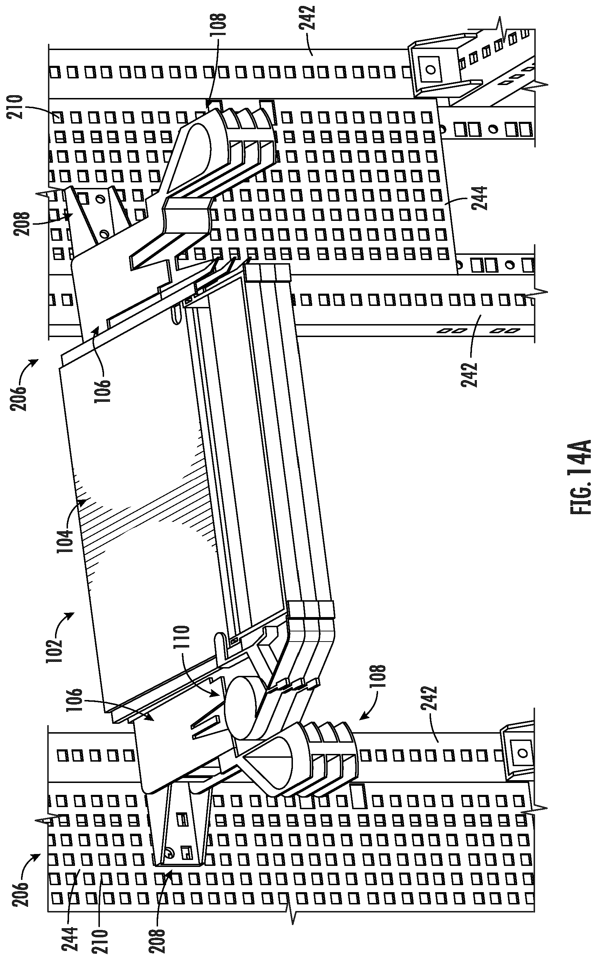

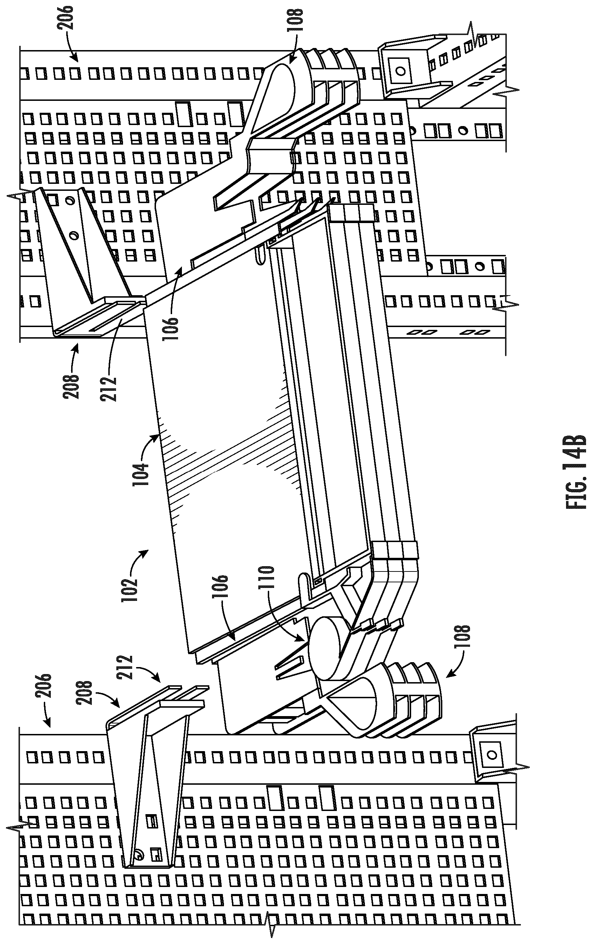

The tray assemblies 102 of the present disclosure are secured to a rack 206 by mounting brackets 208 (see FIGS. 14A and 14B). The mounting brackets 208 may be secured to apertures 210 within the frame 242 and panels 244 of the rack 206 using mounting hardware as described in more detail below.

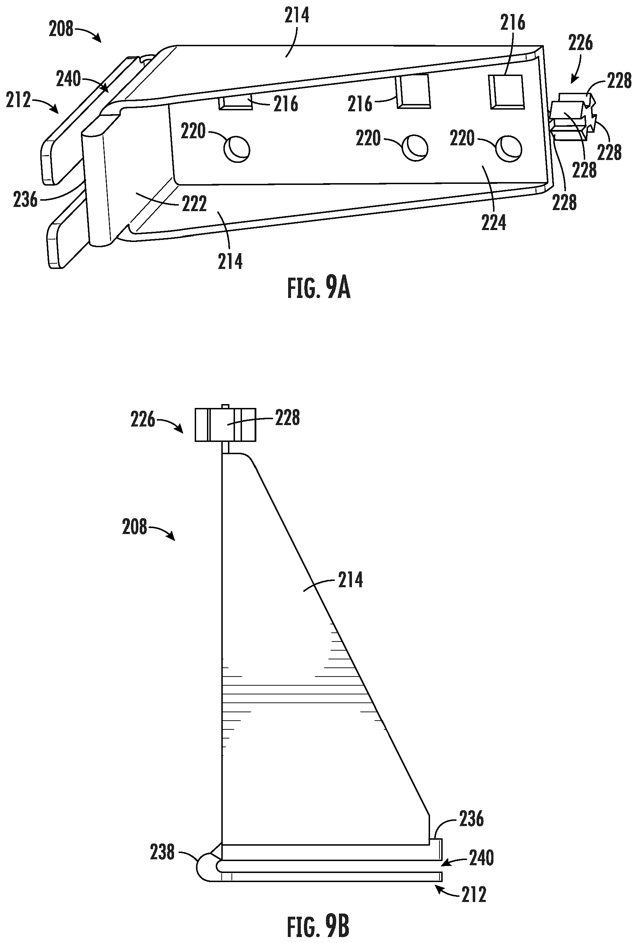

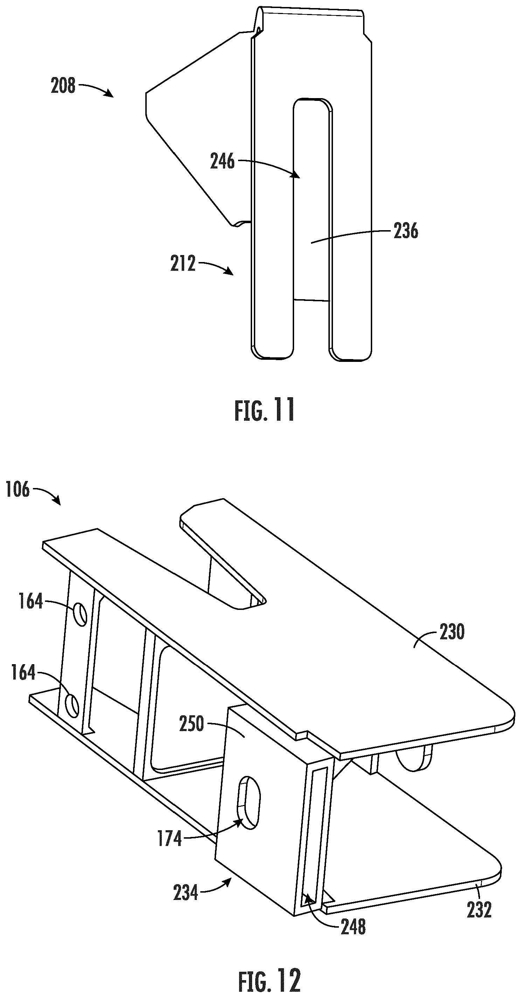

Referring to FIGS. 9A and 9B, a front perspective view and a side elevation view of an example mounting bracket 208 are provided, respectively. The mounting bracket 208 has a right triangle shape from the side view, with two right triangle shaped support surfaces 214 connecting both a base 236 and a rack engagement portion 224. Thus, the support surfaces 214 are tapered in a direction away from the base 236. The mounting bracket 208 includes one or more mounting arms 212 for engaging the channel assemblies 106 of the tray assembly 102. In the illustrated embodiment there are two mounting arms 212. The mounting arms 212 extend from the base 236, and include a curved portion 238 such that there is a gap 240 between the mounting arms 212 and the base 236. This gap 240 is provided to provide clearance for receiving a bracket receiving portion 234 of the channel assembly 106 as described in more detail below with respect to FIGS. 11 and 12.

The rack engagement portion 224 is secured against a face of the rack 206 when the mounting bracket 208 is mounted to the rack 206. The rack engagement portion 224 includes three lock opening 216 and fastener hole 220 pairs along its length (i.e., lock opening and fastener hole pairs). The lock openings 216 and fastener holes 220 are positioned on the rack engagement portion 224 such that they align with individual apertures 210 of the rack 206. The lock openings 216 are operable to receive a lock 226 having pawls 228 to temporarily secure the mounting bracket 208 prior to fastener hardware, such as screws or bolts, are inserted into the fastener holes 220 to securely mount the mounting bracket 208 to the rack 206.

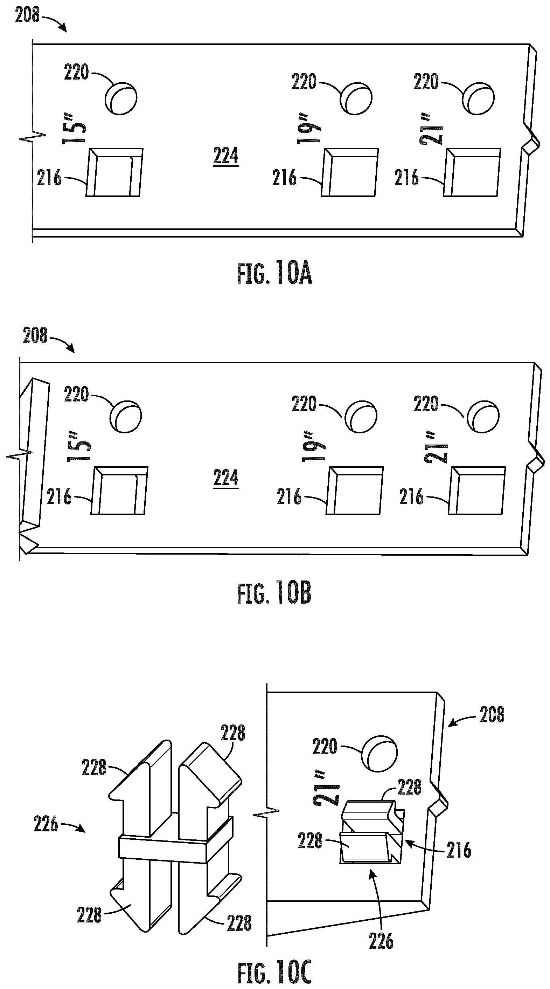

FIG. 10A illustrates a partial view of a front side of a mounting bracket 208, FIG. 10B illustrates a partial view of a back side of the mounting bracket 208 of FIG. 11A, and FIG. 10C illustrates a close-up view of both a lock 226 and a lock 226 inserted into a lock opening 216 of a mounting bracket 208. As shown by FIGS. 10A and 10B, each side of the rack engagement portion 224 of the mounting bracket 208 is marked with numerals proximate each lock opening 216 and fastener hole 220 pair to indicate a sized frame (e.g., 15", 19", and 21") to be used with the associated lock opening 216 and fastener hole 220 pair.

As shown by FIG. 10C, the lock 226 includes a plurality of flexible pawls 228 that are operable to bend toward each other when they are inserted into the lock openings 216 and apertures 210 of the rack 206, and then move back to their original, uncompressed positions after being fully inserted into the lock opening 216 and the apertures 210. The lock 226 may be made of a compliant plastic, for example. In some embodiments, the lock 226 is molded as a portion of the mounting bracket 208, such as the rack tray engagement portion 222 as shown in FIG. 9A and FIG. 9B. The lock 226 may be separated from the rest of the mounting bracket 208 when the user is ready to secure the mounting bracket 208 to the rack 206. In FIG. 10C the user has inserted a lock 226 into the lock opening 216 of the 21" marking for a 21" frame of the rack 206.

Referring now to FIGS. 11 and 12, a rear perspective view of a mounting bracket 208 and a perspective view of a channel assembly 106 are provided, respectively. The mounting arms 212 of the illustrated embodiment include two individual mounting arms 212 having a slot 246 located therebetween. A gap 240 is present between the mounting arms 212 and the base 236 (see FIG. 9B).

The channel assembly 106 includes a bracket receiving portion 234 that includes the tray member engagement aperture 174 described above. Thus, the bracket receiving portion 234 is positioned on the side of the channel assembly 106 that faces the tray 104. The bracket receiving portion 234 defines a slot 248 that is sized and shaped to receive the mounting arms 212 of the mounting bracket 208. The slot 246 between the two individual mounting arms 212 provides clearance for the channel assembly engagement post 176 (FIG. 4) when it is inserted into the tray member engagement aperture 174. Thus, the channel assembly engagement post 176 sits between the two individual mounting arms 212 within the slot 248 of the bracket receiving portion 234. Further, a side face 250 of the channel assembly 106 is disposed within the gap 240 between the base 236 and the mounting arms 212 of the mounting bracket 208 to secure the tray assembly 102 to the mounting bracket 208 and the rack 206.

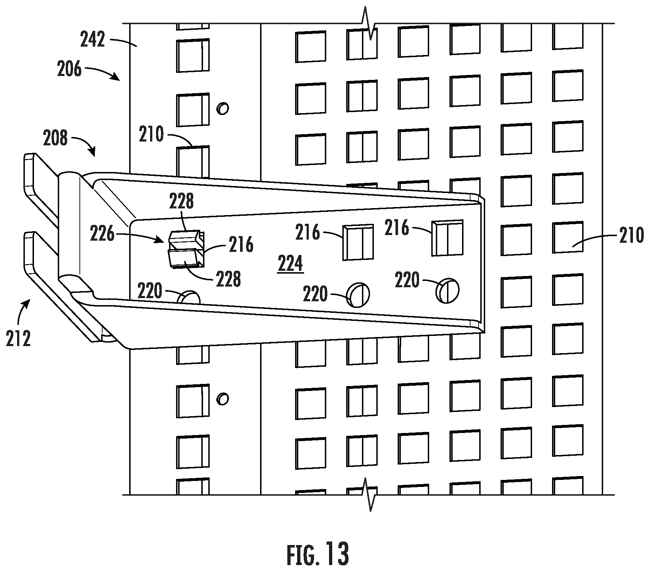

FIG. 13 illustrates a mounting bracket 208 partially mounted to a frame 242 of a rack 206 by way of a lock 226. The user has pressed two of the pawls 228 into both the lock opening 216 and an aperture 210 within the frame to partially secure the mounting bracket 208 to the rack 206. The three fastener holes 220 are aligned with apertures 210 of the rack. In a next step, the user will position fastener hardware into the fastener holes 220 and apertures 210 to rigidly secure the mounting bracket 208 to the rack 206 so that it is ready to receive a tray assembly 102.

Referring now to FIG. 14A, the tray assemblies 102 of the present disclosure are secured to a rack 206 by mounting brackets 208. The mounting brackets 208 may be secured to apertures 210 within the frame 242 and panels 244 of the rack 206 using mounting hardware as described in more detail below. It should be understood that some racks 206 may include only a frame 242 and no panels 244. The tray assembly 102 is secured to two mounting brackets 208 by sliding the channel assemblies 106 onto the mounting brackets 208 either before the mounting brackets 208 are secured to the rack 206 or after. The mounting brackets 208 allow for easy installation of the tray channel assemblies 106 into racks 206 of any configuration.

FIG. 14B illustrates two mounting brackets 208 mounted to a rack 206 prior to a tray assembly 102 being positioned on the mounting brackets 208. The mounting arms 212 of each mounting bracket 208 are received by the bracket receiving portion 234 of channel assemblies 106 (FIG. 12). After the mounting brackets 208 are mounted to the rack 206 by way of the apertures 210 and mounting hardware (e.g., the locks 226 and screws or nuts and bolts), the tray assembly 102 is coupled to the mounting brackets 208 by the moving tray assembly 102 in a direction toward the rack 206 such that the mounting arms 212 are received within the slot 248 (FIG. 12) of the channel assembly 106, thereby engaging the channel assemblies 106 of the tray assembly 102 with mounting brackets 208 (via mounting arms 212 and slot 248). The mating relationship between the mounting arms 212 and the bracket receiving portion 234 of the of the channel assembly 106 secures the tray assembly 102 to mounting brackets 208 and thus secures the tray assembly to the rack 206. The tray assembly 102 may be removed from the rack 206 by pulling the tray assembly 102 in a direction away from the rack such that mounting arms 212 disengage with channel assemblies 106 of tray assembly 102.

In a first aspect, a mounting bracket for mounting a fiber tray assembly to a rack includes a rack engagement portion operable to be positioned against the rack. The rack engagement portion includes a plurality of lock opening and fastener hole pairs, where a location of each lock opening and each fastener hole is operable to be aligned with an aperture of the rack. The mounting bracket further includes a base extending from an end of the rack engagement portion, at least one mounting arm extending from the base such that a gap is present between the at least one mounting arm and the base, and a first support surface and a second support surface each connected to the rack engagement portion and the base.

In a second aspect, a mounting bracket of the first aspect, wherein the at least one mounting arm comprises first mounting arm and a second mounting arm having a gap therebetween.

In a third aspect, a mounting bracket of the first aspect or the second aspect, wherein the plurality of lock opening and fastener hole pairs comprises three lock opening and fastener hole pairs.

In a fourth aspect, a mounting bracket of any one of the preceding aspects, wherein the at least one mounting arm comprises a curved portion.

In a fifth aspect, a mounting bracket of any one of the preceding aspects, wherein the at least one mounting arm is parallel to the base.

In a sixth aspect, a mounting bracket of any one of the preceding aspects, further including a lock operable to be inserted into an individual lock opening of the plurality of lock opening and fastener hole pairs.

In a seventh aspect, a mounting bracket of the sixth aspect, wherein the lock comprises a plurality of pawls.

In an eighth aspect, a mounting bracket of the sixth aspect, wherein the lock is molded to a portion of the bracket in a manner that it is operable to be broken off by a user.

In a ninth aspect, a mounting bracket of any one of the preceding aspects, wherein the base is orthogonal to the rack engagement portion.

In a tenth aspect, a mounting bracket of any one of the preceding aspects, wherein the first support surface and the second support surface each has a right triangle shape.

In an eleventh aspect, a fiber tray assembly includes a tray, a first tray member and a second tray member. The tray is slidably attached to the first tray member and the second tray member. The fiber tray assembly further includes at least one fiber routing sub-assembly coupled to the tray and including a channel assembly having a top plate and a bottom plate that define a channel. The fiber tray assembly also includes a router coupled to an end of the channel assembly, the router including one or more slots for routing one or more optical fibers, and at least one bridge includes a bend radius protector and an engagement member. The engagement member is operable to pivotally attach to the tray, where the channel assembly, the router, and the at least one bridge define a serpentine fiber routing path that is external to the tray. The fiber tray assembly also includes at least one mounting bracket for mounting the tray, the first tray member, the second tray member, and the at least one fiber routing sub-assembly to a rack.

In a twelfth aspect, a fiber tray assembly of the eleventh aspect, wherein the at least one mounting bracket comprises a rack engagement portion operable to be positioned against the rack, the rack engagement portion comprising a plurality of lock opening and fastener hole pairs, wherein a location of each lock opening and each fastener hole is operable to be aligned with an aperture of the rack; a base extending from an end of the rack engagement portion; at least one mounting arm extending from the base such that a gap is present between the at least one mounting arm and the base; and a first support surface and a second support surface each connected to the rack engagement portion and the base.

In a thirteenth aspect, a fiber tray assembly of the twelfth aspect, wherein the at least one mounting arm comprises first mounting arm and a second mounting arm having a gap therebetween.

In a fourteenth aspect, a fiber tray assembly of the twelfth or thirteenth aspects, wherein the plurality of lock opening and fastener hole pairs comprises three lock opening and fastener hole pairs.

In a fifteenth aspect, a fiber tray assembly of any one of the of the twelfth through fourteenth aspects, wherein the mounting bracket further comprises a lock operable to be inserted into an individual lock opening of the plurality of lock opening and fastener hole pairs.

In a sixteenth aspect, a fiber tray assembly of the fifteenth aspect, wherein the lock comprises a plurality of pawls.

In a seventeenth aspect, a fiber tray assembly of the fifteenth aspect, wherein the lock is molded to a portion of the bracket in a manner that it is operable to be broken off by a user.

In an eighteenth aspect, a fiber tray assembly of the any one of the twelfth through seventeenth aspects, wherein the base is orthogonal to the rack engagement portion.

In a nineteenth aspect, a fiber tray assembly of the any one of the twelfth through eighteenth aspects, wherein the first support surface and the second support surface each has a right triangle shape.

In a twentieth aspect, a fiber tray assembly of the any one of the twelfth through nineteenth aspects, wherein the channel assembly further comprises a bracket receiving portion defining a slot, and the at least one mounting arm is disposed within the slot and a side face of the bracket receiving portion is disposed within the gap between the at least one mounting arm and the base.

In a twenty-first aspect, a fiber rack assembly includes a rack having a plurality of apertures, a first mounting bracket and a second mounting bracket each coupled to the rack by way of individual apertures of the plurality of apertures. The fiber rack assembly also includes a fiber tray assembly coupled to the first mounting bracket and the second mounting bracket. The fiber tray assembly includes a tray, a first tray member and a second tray member. The tray is slidably attached to the first tray member and the second tray member. The tray assembly further includes a first fiber routing sub-assembly and a second fiber routing sub-assembly coupled to the tray. The first fiber routing sub-assembly the second fiber routing sub-assembly each includes a channel assembly having a top plate and a bottom plate that define a channel, and a router coupled to an end of the channel assembly, the router including one or more slots for routing one or more optical fibers. At least one of the first fiber routing sub-assembly and the second fiber routing sub-assembly includes at least one bridge having a bend radius protector and an engagement member, where the engagement member is operable to pivotally attach to the tray, where the channel assembly, the router, and the at least one bridge define a serpentine fiber routing path that is external to the tray.

In a twenty-second aspect, a fiber rack assembly of the twenty-first aspect, wherein the at least one mounting bracket comprises a rack engagement portion operable to be positioned against the rack, the rack engagement portion comprising a plurality of lock opening and fastener hole pairs, wherein a location of each lock opening and each fastener hole is operable to be aligned with an aperture of the rack; a base extending from an end of the rack engagement portion; at least one mounting arm extending from the base such that a gap is present between the at least one mounting arm and the base; and a first support surface and a second support surface each connected to the rack engagement portion and the base.

In a twenty-third aspect, a fiber rack assembly of the twenty-second aspect, wherein the at least one mounting arm comprises first mounting arm and a second mounting arm having a gap therebetween.

In a twenty-fourth aspect, a fiber rack assembly of the twenty-second or twenty-third aspects, wherein the plurality of lock opening and fastener hole pairs comprises three lock opening and fastener hole pairs.

In a twenty-fifth aspect, a fiber rack assembly of any one of the twenty-second through twenty-fourth aspects, wherein the plurality of lock opening and fastener hole pairs comprises three lock opening and fastener hole pairs.

In a twenty-sixth aspect, a fiber rack assembly of the twenty-fifth aspect, wherein the lock comprises a plurality of pawls.

In a twenty-seventh aspect, a fiber rack assembly of the twenty-fifth aspect, wherein the lock is molded to a portion of the bracket in a manner that it is operable to be broken off by a user.

In a twenty-eighth aspect, a fiber rack assembly of any one of the twenty-second through twenty-seventh aspects, wherein the base is orthogonal to the rack engagement portion.

In a twenty-ninth aspect, a fiber rack assembly of any one of the twenty-second through twenty-eighth aspects, wherein the first support surface and the second support surface each has a right triangle shape.

In a thirtieth aspect, a fiber rack assembly of any one of the twenty-second through twenty-ninth aspects, wherein the channel assembly further comprises a bracket receiving portion defining a slot, and the at least one mounting arm is disposed within the slot and a side face of the bracket receiving portion is disposed within the gap between the at least one mounting arm and the base.

It should now be understood that embodiments of the present disclosure are directed to fiber tray assemblies having a fiber routing sub-assembly external to a tray that provides a slack optical fiber storage area in the form of a serpentine path that is external to the tray. Having this serpentine path external to the tray minimizes optical fiber movement within the tray, particularly when the tray is opened and closed. This further minimizes optical loss due to fiber movement. The fiber tray assemblies described herein are backwards compatible with existing housings and racks and therefore do not require re-design of these components. Mounting brackets are used to secure the fiber tray assemblies to a rack of any configuration.

Although the disclosure has been illustrated and described herein with reference to explanatory embodiments and specific examples thereof, it will be readily apparent to those of ordinary skill in the art that other embodiments and examples can perform similar functions and/or achieve like results. All such equivalent embodiments and examples are within the spirit and scope of the disclosure and are intended to be covered by the appended claims. It will also be apparent to those skilled in the art that various modifications and variations can be made to the concepts disclosed without departing from the spirit and scope of the same. Thus, it is intended that the present application covers the modifications and variations provided they come within the scope of the appended claims and their equivalents.

## Claims

1. A mounting bracket for mounting a fiber tray assembly to a rack, the mounting bracket comprising:
a rack engagement portion operable to be positioned against the rack, the rack engagement portion comprising a plurality of lock opening and fastener hole pairs, wherein a location of each lock opening and each fastener hole is operable to be aligned with an aperture of the rack;
a base extending from an end of the rack engagement portion;
at least one mounting arm extending from the base such that a gap is present between the at least one mounting arm and the base; and
a first support surface and a second support surface each connected to the rack engagement portion and the base.

2. The mounting bracket of claim 1, wherein the at least one mounting arm comprises first mounting arm and a second mounting arm having a gap therebetween.

3. The mounting bracket of claim 1 or claim 2, wherein the plurality of lock opening and fastener hole pairs comprises three lock opening and fastener hole pairs.

4. The mounting bracket of any preceding claim, wherein the at least one mounting arm comprises a curved portion.

5. The mounting bracket of any preceding claim, wherein the at least one mounting arm is parallel to the base.

6. The mounting bracket of any preceding claim, further comprising a lock operable to be inserted into an individual lock opening of the plurality of lock opening and fastener hole pairs.

7. The mounting bracket of claim 6, wherein the lock comprises a plurality of pawls.

8. The mounting bracket of claim 6, wherein the lock is molded to a portion of the at least one mounting bracket in a manner that it is operable to be broken off by a user.

9. The mounting bracket of any preceding claim, wherein the base is orthogonal to the rack engagement portion.

10. The mounting bracket of any preceding claim, wherein the first support surface and the second support surface each has a right triangle shape.

11. A fiber tray assembly comprising:
a tray;
a first tray member and a second tray member, wherein the tray is slidably attached to the first tray member and the second tray member;
at least one fiber routing sub-assembly coupled to the tray, the at least one fiber routing sub-assembly comprising:
a channel assembly comprising a top plate and a bottom plate that define a channel;
a router coupled to an end of the channel assembly, the router comprising one or more slots for routing one or more optical fibers; and
at least one bridge comprising a bend radius protector and an engagement member, wherein the engagement member is operable to pivotally attach to the tray, wherein the channel assembly, the router, and the at least one bridge define a serpentine fiber routing path that is external to the tray; and
at least one mounting bracket according to any of claims 1-10 for mounting the tray, the first tray member, the second tray member, and the at least one fiber routing sub-assembly to a rack.

12. The fiber tray assembly of claim 11, wherein the channel assembly further comprises a bracket receiving portion defining a slot, and the at least one mounting arm is disposed within the slot and a side face of the bracket receiving portion is disposed within the gap between the at least one mounting arm and the base.

13. A fiber rack assembly comprising:
a rack comprising a plurality of apertures;
a first mounting bracket and a second mounting bracket each in accordance with any of claims 1-10 and each coupled to the rack by way of individual apertures of the plurality of apertures; and
a fiber tray assembly coupled to the first mounting bracket and the second mounting bracket, the fiber tray assembly comprising:
a tray;
a first tray member and a second tray member, wherein the tray is slidably attached to the first tray member and the second tray member;
a first fiber routing sub-assembly and a second fiber routing sub-assembly coupled to the tray, the first fiber routing sub-assembly the second fiber routing sub-assembly each comprising:
a channel assembly comprising a top plate and a bottom plate that define a channel; and
a router coupled to an end of the channel assembly, the router comprising one or more slots for routing one or more optical fibers,
wherein at least one of the first fiber routing sub-assembly and the second fiber routing sub-assembly comprises at least one bridge comprising a bend radius protector and an engagement member, wherein the engagement member is operable to pivotally attach to the tray, wherein the channel assembly, the router, and the at least one bridge define a serpentine fiber routing path that is external to the tray.

14. The fiber rack assembly of claim 13, wherein the channel assembly further comprises a bracket receiving portion defining a slot, and the at least one mounting arm is disposed within the slot and a side face of the bracket receiving portion is disposed within the gap between the at least one mounting arm and the base.
